# EUROPEAN PATENT APPLICATION

(11) **EP 4 005 383 A1**
(43) Date of publication of application: **01.06.2022**
(21) Application number: 20843141.1
(22) Date of filing: 10.07.2020
(51) Int. Cl.: A01N 1/02

(54) **PERFUSION DEVICE**

(30) Priority: 25.07.2019 JP 2019136693
(71) Applicant: SCREEN Holdings Co., Ltd., Kyoto 602-8585 (JP)
(72) Inventor: OHARA Masayuki, Kyoto-shi, Kyoto 602-8585 (JP); KASAMATSU Hiroo, Kyoto-shi, Kyoto 602-8585 (JP); YOSHIMOTO Syuhei, Kyoto-shi, Kyoto 602-8585 (JP)
(74) Representative: Kilian Kilian & Partner
(86) International application number: PCT/JP2020/027086
(87) International publication number: WO 2021/015014

(57) **Abstract**

A perfusion device includes first inlet piping (31) that connects a reservoir and a portal vein, second inlet piping (41) that connects the reservoir and a hepatic artery, a first pump (32) that produces a flow in the first inlet piping (31), and a second pump (42) that produces a flow in the second inlet piping (41). The first and second pumps (32 ,42) are of the same type, each having a rotating portion for solution sending. The rotating portion of the first pump (32) has a greater diameter than the rotating portion of the second pump (42). Thus, even if the first and second pumps (32, 42) make the same number of rotations, the ratio of the flow rate of the perfusate between the first inlet piping (31) and the second inlet piping (41) can be made almost constant. Accordingly, the perfusate is supplied under appropriate conditions to the portal vein and the hepatic artery with a simple configuration.

## Description

### Technical Field

The present invention relates to a perfusion device for performing a perfusion process on an isolated liver with two types of inflow blood vessels.

### Background Art

In transplant operations such as liver transplantation, after an organ is removed from a donor, the organ is preserved temporarily until the organ is transplanted into a recipient. Various preservation methods and perfusion methods have been developed in order to preserve such an isolated organ in a transplantable condition. To preserve an isolated organ, for example, a simple cooling method is known, in which the blood in an organ is replaced by a low-temperature organ preservation solution and then the organ is immersed in a low-temperature preservation solution in order to suppress cell metabolism. Another perfusion preservation method is also known, in which an internal vascular network is perfused with a perfusate for the purpose of removing waste products in an organ.

For example, Patent Document 1 discloses a conventional device for preserving an organ in vivo.

### Prior Art Documents

### Patent Literature

Patent Literature 1: Japanese Patent Application Laid-Open No. H3-151303

### Summary of Invention

### Problems to be Solved by Invention

Patent Document 1 discloses a configuration of the device in which a perfusate pumped from a reservoir by a solution-sending pump is supplied to an organ through a perfusion tube. When the organ perfusion process is performed in this way, piping is connected to the organ to supply the perfusate into the organ.

Here, the liver has two large inflow blood vessels. One of the inflow blood vessels is the portal vein, and the other is the hepatic artery. In the case of preserving the liver with a perfusate, it is preferable that the perfusate is supplied to each of the two blood vessels.

The rate of blood inflow to the portal vein is high, but the blood pressure and pulsation in the portal vein are low because the portal vein is in the venous system. On the other hand, the rate of blood inflow to the hepatic artery is lower than that to the portal vein, but the blood pressure and pulsation in the hepatic artery are high because the hepatic artery is in the arterial system. In order to bring the environment around the organ close to the environment within a living body, it is preferable that the perfusate is supplied under different conditions to the two types of blood vessels. However, separately controlling the conditions of mechanisms for feeding the perfusate to the two systems will complicate a mechanism for controlling the two systems and can cause an increase in the size or cost of the device.

The present invention has been made in light of such circumstances, and it is an object of the present invention to provide a technique in which, when a liver is preserved with a perfusate, the perfusate is supplied under appropriate conditions to the portal vein and the hepatic artery with a simple configuration.

### Means for Solving Problems

To solve the problem described above, a first aspect of the present application is a perfusion device for performing a perfusion process on a liver. The perfusion device includes a reservoir that stores a perfusate, first inlet piping with an upstream end connected to the reservoir and a downstream end connected to a portal vein of the liver during the perfusion process, second inlet piping with an upstream end connected to the reservoir and a downstream end connected to a hepatic artery of the liver during the perfusion process, a first pump that produces a flow from upstream to downstream in the first inlet piping, and a second pump that produces a flow from upstream to downstream in the second inlet piping. The first pump and the second pump are pumps of the same type, each having a rotating portion for solution sending. The rotating portion of the first pump has a greater diameter than the rotating portion of the second pump.

A second aspect of the present application is the perfusion device according to the first aspect, in which the perfusate supplied from the downstream end of the first inlet piping by the flow produced in the first inlet piping by the first pump has a flow rate that is 1.2 times or more and 1.5 times or less a flow rate of the perfusate supplied from the downstream end of the second inlet piping by the flow produced in the second inlet piping by the second pump.

A third aspect of the present application is the perfusion device according to the first or second aspect, in which the first pump is a tube pump that produces a flow of the perfusate in the first inlet piping by squeezing the first inlet piping by rotation of a first roller, and the second pump is a tube pump that produces a flow of the perfusate in the second inlet piping by squeezing the second inlet piping by rotation of a second roller.

A fourth aspect of the present application is the perfusion device according to the third aspect, in which the number of first rollers included in the first pump is greater than the number of second rollers included in the second pump, each of the first rollers being the first roller, and each of the second rollers being the second roller.

A fifth aspect of the present application is the perfusion device according to the first or second aspect, in which the first pump is a centrifugal pump that applies a turning force to the perfusate to send out the perfusate by centrifugal force, the first pump being interposed in the first inlet piping, and the second pump is the centrifugal pump that is interposed in the second inlet piping.

### Effects of the Invention

According to the first to fifth aspects of the present application, even if the first and second pumps make the same number of rotations, the ratio of the flow rate of the perfusate between the first inlet piping and the second inlet piping can be made almost constant. That is, the ratio of the flow rate of the perfusate between the portal vein and the hepatic artery can be made almost constant without any special control. Accordingly, the perfusate can be supplied under appropriate conditions to the portal vein and the hepatic artery with a simple configuration.

In particular, according to the second aspect of the present application, the perfusate can be supplied under more appropriate conditions to the portal vein and the hepatic artery.

In particular, according to the third and fourth aspects of the present application, since the tube pumps send a perfusate by applying pressure from outside the tubes, pump bodies will not come in contact with the perfusate. This eliminates the need to sterilize the pump bodies and thereby facilitates maintenance.

In particular, according to the fourth aspect of the present application, the amount of the perfusate to be sent during one pulsation cycle of the first pump can be reduced more than in the case where the number of first rollers and the number of second rollers are the same. This suppresses an increase in the pressure of the perfusate supplied to the portal vein.

In particular, according to the fifth aspect of the present application, hemolysis is less likely to occur in the perfusion device even if the perfusate contains erythrocytes.

### Brief Description of Drawings

Fig. 1 is a schematic view illustrating a configuration of a perfusion device according to Embodiment 1;
Fig. 2 is a plan view of first and second pumps according to Embodiment 1;
Fig. 3 is a plan view of first and second pumps according to Embodiment 2; and
Fig. 4 is a plan view of first and second pumps according to Embodiment 3.

### Description of Embodiments

Hereinafter, embodiments of the present invention will be described with reference to the accompanying drawings. In the present application, "donors" and "recipients" may be humans, or may be non-human animals. That is, "organs" according to the present application may be human organs, or may be organs of non-human animals. The non-human animals may be rodents such as mice and rats, ungulates such as pigs, goats, and sheep, non-human primates such as chimpanzees, or other non-human mammals, or may be nonmammalian animals.

### 1. Embodiment 1

### 1-1. Configuration of Perfusion Device

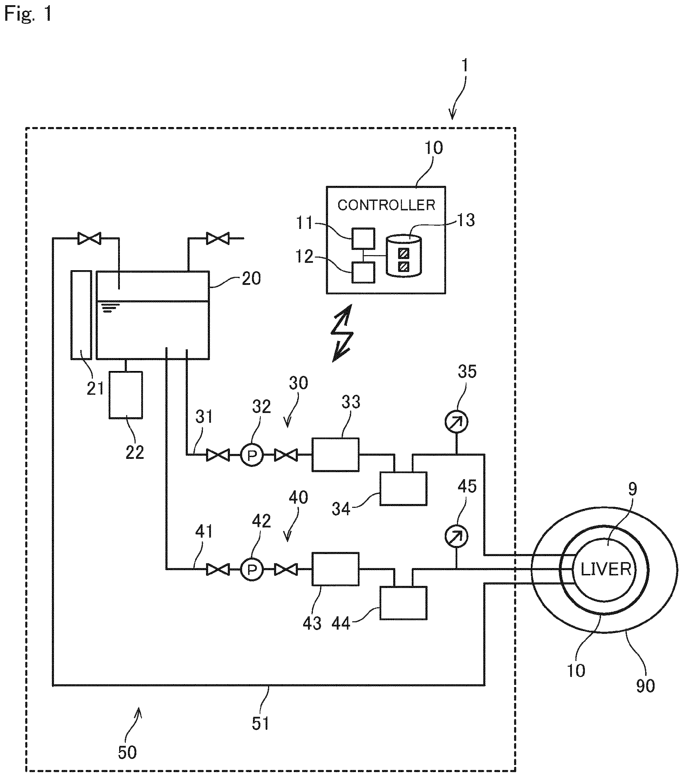

A perfusion device 1 according to Embodiment 1 of the present invention will be described with reference to Fig. 1. Fig. 1 is a schematic view illustrating a configuration of the perfusion device 1. The perfusion device 1 is a device for temporally preserving an organ removed from a donor ex vivo until the organ is transplanted into a recipient. The perfusion device 1 supplies a perfusate to the liver to perform perfusion.

When the perfusion device 1 performs a perfusion process, a liver 9 is housed in a reactor 90. The reactor 90 houses therein an organ preservation solution and the liver 9 connected to the perfusion device 1. For example, the reactor 90 may be a cup-shaped (closed-end tubular) container.

As illustrated in Fig. 1, the perfusion device 1 includes a reservoir 20, a first perfusate inflow part 30, a second perfusate inflow part 40, a perfusate outflow part 50, and a controller 10. In the present embodiment, the perfusion device 1 includes one perfusate outflow part 50, but the perfusion device 1 may include a plurality of perfusate outflow parts 50.

The reservoir 20 is a container that stores a perfusate. A temperature control mechanism 21 and a gas exchange mechanism 22 are provided around the reservoir 20. In the present embodiment, an ETK solution is used as the perfusate. Alternatively, the perfusate may be any other type of perfusate such as a UV solution.

The temperature control mechanism 21 controls the temperature of the perfusate stored in the reservoir 20. The gas exchange mechanism 22 supplies gas such as oxygen to the perfusate stored in the reservoir 20 so that the gas is dissolved in the perfusate. Note that the gas exchange mechanism 22 may be interposed in inlet piping 31 of the perfusate inflow part 30 and inlet piping 41 of the perfusate inflow part 40, which will be described later.

The first perfusate inflow part 30 supplies the perfusate from the reservoir 20 to the portal vein of the liver 9. The first perfusate inflow part 30 includes the first inlet piping 31, a first pump 32, a temperature control unit 33, a deaerating unit 34, and a pressure indicator 35. The temperature control unit 33, the deaerating unit 34, and the pressure indicator 35 are interposed in the first inlet piping 31.

One end of the first inlet piping 31 is connected to the reservoir 20. The other end of the first inlet piping 31 is connected to the portal vein of the liver 9 that is to be perfused, during the perfusion process. Thus, the perfusate is supplied from the reservoir 20 to the portal vein of the liver 9. The first pump 32 produces a flow of the perfusate from the reservoir 20 to the liver 9 in the first inlet piping 31. A detailed configuration of the first pump 32 will be described later.

The temperature control unit 33 controls the temperature of the perfusate in the first inlet piping 31. The temperature control unit 33 causes the temperature of the perfusate in the first inlet piping 31 to become a set temperature by, for example, immersing part of the first inlet piping 31 in a liquid having a set temperature of, for example, 4°C, 20°C, or 37°C. The deaerating unit 34 removes gas components of the perfusate in the first inlet piping 31. The pressure indicator 35 measures the pressure of the perfusate in the first inlet piping 31.

The second perfusate inflow part 40 supplies the perfusate from the reservoir 20 to the hepatic artery of the liver 9. The second perfusate inflow part 40 includes the second inlet piping 41, a second pump 42, a temperature control unit 43, a deaerating unit 44, and a pressure indicator 45. The temperature control unit 43, the deaerating unit 44, and the pressure indicator 45 are interposed in the second inlet piping 41.

One end of the second inlet piping 41 is connected to the reservoir 20. The other end of the second inlet piping 41 is connected to the hepatic artery of the liver 9 that is to be perfused, during the perfusion process. Accordingly, the perfusate is supplied from the reservoir 20 to the hepatic artery of the liver 9. The second pump 42 produces a flow of the perfusate from the reservoir 20 to the liver 9 in the second inlet piping 41. A detailed configuration of the second pump 42 will be described later.

The temperature control unit 43, the deaerating unit 44, and the pressure indicator 45 of the second perfusate inflow part 40 are the same as the temperature control unit 33, the deaerating unit 34, and the pressure indicator 35 of the first perfusate inflow part 30. Note that the temperature control unit 33 of the first perfusate inflow part 30 and the temperature control unit 43 of the second perfusate inflow part 40 may be replaced by a single temperature control unit that controls the temperatures of the perfusate in both of the first inlet piping 31 and the perfusate in the second inlet piping 41 at the same time.

The perfusate outflow part 50 causes the perfusate to be discharged from the liver 9. The perfusate outflow part 50 includes outflow piping 51. One end of the outflow piping 51 is connected to the liver 9 that is to be perfused, during the perfusion process. In the present embodiment, the outflow piping 51 is connected to the suprahepatic inferior vena cava (SH-IVC) or infrahepatic inferior vena cava (IH-IVC) of the liver 9. The other end of the outflow piping 51 is connected to the reservoir 20. Accordingly, the perfusate discharged from the suprahepatic inferior vena cava (SH-IVC) or infrahepatic inferior vena cava (IH-IVC) of the liver 9 flows back to the reservoir 20. Alternatively, a pump that produces a flow of the perfusate from the liver 9 to the reservoir 20 may be interposed in the outflow piping 51.

The perfusion device 1 according to the present embodiment is configured to cause the perfusate discharged from the liver 9 to flow back to the reservoir 20, but the present invention is not limited thereto. The perfusate discharged from the liver 9 may be discarded or stored in another container without flowing back to the reservoir 20.

Note that each of the reservoir 20, the perfusate inflow parts 30 and 40, and the perfusate outflow part 50 may include a measuring unit for detecting pH or a specific component, as appropriate. As another alternative, the inlet piping 31 and 41, and the outflow piping 51 may have a flowmeter, a solenoid valve that controls communication, or any other device interposed therein.

The controller 10 is configured to control operations of each constituent element of the perfusion device 1. As schematically illustrated in Fig. 1, the controller 10 is configured as, for example, a computer that includes an arithmetic processing unit 11 such as a CPU, a memory 12 such as a RAM, and a storage 13 such as a hard disk drive.

### 1-2. Pumps of Perfusate Inflow Parts

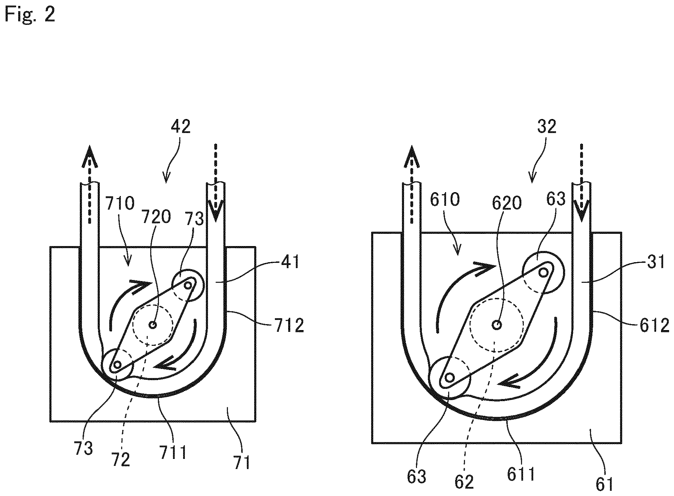

Next, the pumps 32 and 42 of the two perfusate inflow parts 30 and 40 will be described with reference to Fig. 2. Fig. 2 is a plan view of the first pump 32 and the second pump 42 according to the present embodiment. The first pump 32 and the second pump 42 are both of the same type, each having a rotating portion for solution sending.

The first pump 32 and the second pump 42 according to the present embodiment are so-called tube pumps. Each tube pump produces a flow of a liquid to be sent within an elastic tube filled with the liquid, by squeezing the tube with rotating rollers. The tube pump pumps the liquid from the upstream side by negative pressure applied when the tube squeezed by the rollers returns to its original position. This eliminates the need for a check valve and enables accurately controlling the amount of the liquid to be sent. Besides, since the tube pump sends the liquid by applying pressure from outside the tube that passes the liquid, the pump body and the liquid will not come in contact with each other. This eliminates the need to sterilize the pump body even in the case of sending the perfusate, and accordingly facilitates maintenance.

As illustrated in Fig. 2, the first pump 32 includes a first frame 61, a first motor 62, and two first rollers 63. The first frame 61 has a first recess 610. The edge of the first recess 610 includes a first arcuate portion 611 having an arcuate shape and a first open portion 612 that is open up to the end of the first frame 61. During use of the first pump 32, the first inlet piping 31 is placed along the edge of the first recess 610 of the first frame 61 as illustrated in Fig. 2.

The first motor 62 rotates the two first rollers 63 about a first central axis 620. The first motor 62 may, for example, be a brushless motor. In Fig. 2, the rotation direction of the first rollers 63 is shown by arrows with solid lines. The flow direction of the perfusate in the first inlet piping 31 is shown by arrows with broken lines.

The two first rollers 63 are arranged to have 180-degree rotational symmetry about the first central axis 620. The first arcuate portion 611 of the first frame 61 has an arcuate shape about the first central axis 620. A difference between the distance from the first central axis 620 to the first arcuate portion 611 and the distance from the first central axis 620 to the outer ends of the first rollers 63 is smaller than the outside diameter of the first inlet piping 31. Thus, the first rollers 63 rotate while squeezing the first inlet piping 31 set in the first frame 61 under pressure. Accordingly, the perfusate in the first inlet piping 31 is squeezed out in the rotation direction of the first rollers 63 and produces a flow into the first inlet piping 31.

That is, the first pump 32 is a tube pump that produces a flow of the perfusate in the first inlet piping 31 by squeezing the first inlet piping 31 by rotation of the first rollers 63.

Similarly, the second pump 42 includes a second frame 71, a second motor 72 that rotates about a second central axis 720, and two second rollers 73. The second frame 71 has a second recess 710. The edge of the second recess 710 includes a second arcuate portion 711 having an arcuate shape and a second open portion 712 that is open up to the end of the second frame 71. During use of the second pump 42, the second inlet piping 41 is placed along the edge of the second recess 710 of the second frame 71 as illustrated in Fig. 2.

In this way, the configuration of the second pump 42 is almost the same as that of the first pump 32. The second pump 42 is a tube pump that produces a flow of the perfusate in the second inlet piping 41 by squeezing the second inlet piping 41 by rotation of the second rollers 73. In Fig. 2, the rotation direction of the second roller 73 is shown by arrows with solid lines. The flow direction of the perfusate in the second inlet piping 41 is shown by arrows with broken lines.

Here, the rotating portion of the first pump 32 has a greater diameter than the rotating portion of the second pump 42. Specifically, the distance from the first central axis 620 to the first arcuate portion 611 is greater than the distance from the second central axis 720 from the second arcuate portion 711. The distances from the first central axis 620 to the outer ends of the first rollers 63 is greater than the distances from the second central axis 720 to the outer ends of the second rollers 73.

Accordingly, when the first motor 62 of the first pump 32 and the second motor 72 of the second pump 42 make the same number of rotations, the flow rate of the perfusate in the flow of the perfusate produced in the first inlet piping 31 by the first pump 32 becomes higher than the flow rate of the perfusate in the flow of the perfusate produced in the second inlet piping 41 by the second pump 42.

Blood to the liver in a living body is supplied by the portal vein and the hepatic artery. The blood pressure in the hepatic artery is high because the hepatic artery is in the arterial system, but the blood flow rate in the hepatic artery is low. In contrast, the blood pressure in the portal vein is much lower than that in the hepatic artery because the portal vein is in the venous system, but the blood flow rate in the portal vein is high. The perfusion device 1 can make the flow rate of the perfusate in the first inlet piping 31, which is connected to the portal vein, higher than the flow rate of the perfusate in the second inlet piping 41, which is connected to the hepatic artery, without making the number of rotations of the first motor 62 different from the number of rotations of the second motor 72.

In order in this way to make the flow rate of the perfusate in the first inlet piping 31 different from the flow rate of the perfusate in the second inlet piping 41, the perfusion device uses the pumps that are of the same type and each have a rotating portion with a different diameter. Accordingly, even if the first pump 32 and the second pump 42 make the same number of rotations, the ratio of the flow rate of the perfusate between the first inlet piping 31 and the second inlet piping 41 can be made almost constant. That is, the ratio of the flow rate of the perfusate between the portal vein and the hepatic artery can be made almost constant without any special control. Accordingly, the perfusate can be supplied to the portal vein and the hepatic artery under appropriate conditions with a simple configuration.

When the liver is preserved with a perfusate, it is preferable that the flow rate of the perfusate to be supplied to the portal vein is approximately 1.3 times the flow rate of the perfusate to be supplied to the hepatic artery. Therefore, in the present embodiment, the flow rate of the perfusate in the flow of the perfusate produced in the first inlet piping 31 by the first pump 32 is set to be higher than or equal to 1.2 times and lower than or equal to 1.5 times the flow rate of the perfusate in the flow of the perfusate produced in the second inlet piping 41 by the second pump 42. Accordingly, the perfusate can be supplied under more appropriate conditions to the portal vein and the hepatic artery.

### 2. Embodiment 2

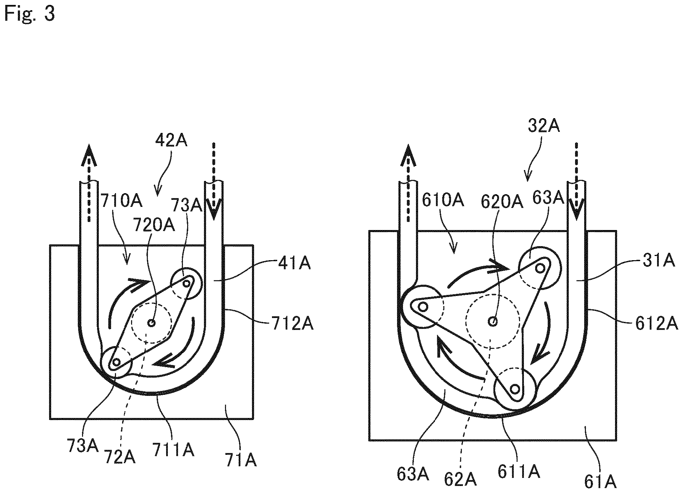

Next, a first pump 32A and a second pump 42A of a perfusion device according to Embodiment 2 will be described with reference to Fig. 3. Fig. 3 is a plan view of the first pump 32A and the second pump 42A. The first pump 32A and the second pump 42A are both tube pumps of the same type as the first pump 32 and the second pump 42 according to Embodiment 1.

Descriptions of constituent elements of the first pump 32A and the second pump 42A according to the present embodiment that are identical to those of the first pump 32 and the second pump 42 according to Embodiment 1 shall be omitted. In Fig. 3, such constituent elements that are not described are given the same reference numerals as those of the corresponding constituent elements in Embodiment 1, with the letter A added thereto.

The first pump 32A includes three first rollers 63A. On the other hand, the second pump 42A includes two second rollers 73A. The three first rollers 63A are arranged to have 120-degree rotational symmetry about a first central axis 620A.

In the first pump 32 according to Embodiment 1, the two first rollers 63 squeeze the first inlet piping 31 during one rotation of the first motor 62. In the second pump 42, the two second rollers 73 squeeze the second inlet piping 41 during one rotation of the second motor 72. Thus, two pulsations occur in the first inlet piping 31 and the second inlet piping 41 during one cycle of rotation T of the motors 62 and 72.

In contrast, in the first pump 32A according to the present embodiment, the first rollers 63A squeeze the first inlet piping 31A three times during one rotation of the first motor 62A. Thus, three pulsations occur in the first inlet piping 31A during one cycle of rotation T of the first motor 62A. In the second pump 42A, on the other hand, the second rollers 73A squeeze the second inlet piping 41A twice during one rotation of the second motor 72A. Thus, two pulsations occur in the second inlet piping 41A during one cycle of rotation T of the second motor 72A.

In the tube pumps, the amount of liquid to be sent by each pulsation decreases as the number of rollers increases, and therefore the pulsation causes a small change in the pressure of the perfusate. Hence, the pressure of the perfusate to be sent by the first pump 32A, which sends a greater amount of perfusate than the second pump 42A, can be reduced by increasing the number of first rollers 63A to become greater than the number of second rollers 73A. As a result, the pressure of the perfusate to be supplied to the portal vein can be reduced.

### 3. Embodiment 3

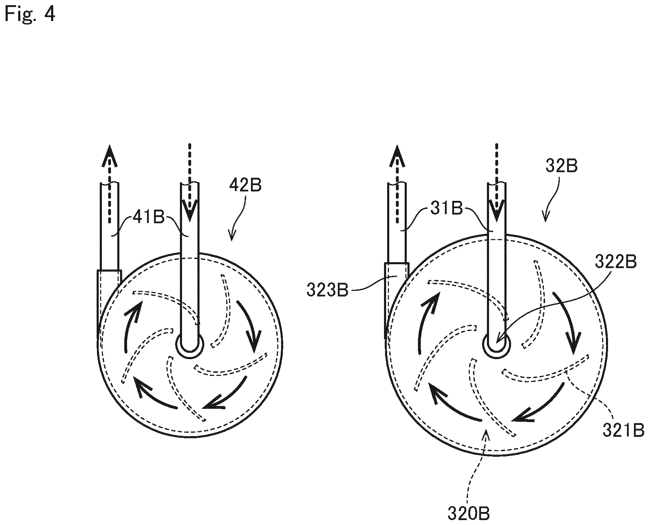

Next, a first pump 32B and a second pump 42B of a perfusion device according to Embodiment 3 will be described with reference to Fig. 4. Fig. 4 is a plan view of the first pump 32B and the second pump 42B.

The first pump 32B and the second pump 42B are both centrifugal pumps for blood. The centrifugal pumps for blood give a turning force to the blood flowing inside the pumps and send out the blood by centrifugal force. Specifically, the first pump 32B is interposed in first inlet piping 31B and configured to give a turning force to the perfusate and send out the perfusate by centrifugal force. The second pump 42B is interposed in second inlet piping 41B and configured to give a turning force to the perfusate and send out the perfusate by centrifugal force.

Note that the centrifugal pumps according to the present embodiment are vane-type centrifugal pumps that produce the centrifugal force applied to the perfusate by rotating a vane-type impeller. Alternatively, the centrifugal pumps may be viscous friction centrifugal pumps that cause a viscous frictional force created by rotation of a conical impeller to produce the centrifugal force applied to the perfusate.

As illustrated in Fig. 4, the first pump 32B includes an internal space 320B filled with the perfusate and a plurality of vanes 321B arranged in the internal space 320B. The upstream side of the first inlet piping 31B is connected to an inlet 322B that communicates with the center of the internal space 320B. The downstream side of the first inlet piping 31B is connected to an outlet 323B provided along the tangential direction of the internal space 320B. In Fig. 4, the rotation direction of the vanes 321B is shown by arrows with solid lines, and the flow direction of the perfusate in the first inlet piping 31B is shown by arrows with broken lines.

When the vanes 321B are rotated by rotation of a motor (not shown) serving as a driving source of the first pump 32B, the perfusate is rotated together with the vanes 321B in the internal space 320B and produces a strong flow in the tangential direction in the outer peripheral portion of the internal space 320B. Accordingly, the perfusate is sent out from the internal space 320B through the outlet 323B to the downstream side of the first inlet piping 31B.

The configuration of the second pump 42B is the same as that of the first pump 32B, and therefore a description thereof shall be omitted. As illustrated in Fig. 4, the rotating portion of the first pump 32B has a greater diameter than the rotating portion of the second pump 42B. As the diameter of the pump increases, the centrifugal force created inside the pump increases and accordingly the amount of the perfusate to be sent by the pump increases.

Accordingly, when the motor of the first pump 32B and the motor of the second pump 42B make the same number of rotations, the amount of the perfusate to be sent by the first pump 32B becomes greater than the amount of the perfusate to be sent by the second pump 42B. That is, the flow rate of the perfusate to be supplied from the downstream end of the first inlet piping 31B by the flow produced in the first inlet piping 31B by the first pump 32B is higher than the flow rate of the perfusate to be supplied from the downstream end of the second inlet piping 41B by the flow produced in the second inlet piping 41B by the second pump 42B.

The first pump 32B and the second pump 42B may also be centrifugal pumps as in the present embodiment. The centrifugal pumps include no valve mechanisms and therefore have the merit of causing less hemolysis even if the perfusate contains erythrocytes. On the other hand, the centrifugal pumps vary in the amount of the perfusate to be sent depending the fore-and-art change in load and accordingly require measurement of an accurate flow rate with a flowmeter.

### 4. Variations

While embodiments of the present invention have been described thus far, the present invention is not intended to be limited to the embodiments described above.

In the above-described embodiments, the first inlet piping and the second inlet piping have the same thickness, but the present invention is not limited thereto. The first inlet piping that sends a greater amount of perfusate may have a greater thickness than the second inlet piping. This suppresses an increase in the pressure of the perfusate in the first inlet piping, which has a higher flow rate of the perfusate.

The above-described embodiments have separately described the case of using tube pumps and the case of using centrifugal pumps. However, a single perfusion device may use both a tube pump and a centrifugal pump.

The configurations of the embodiments and variations described above may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Reference Signs List

1 Perfusion device
9 Liver
20 Reservoir
31, 31A, 31B First inlet piping
32, 32A, 32B First pump
41, 41A, 41B Second inlet piping
42, 42A, 42B Second pump
63, 63A First roller
73, 73A Second roller
100 Perfusion device

## Claims

1. A perfusion device for performing a perfusion process on a liver, the perfusion device comprising:
a reservoir that stores a perfusate;
first inlet piping with an upstream end connected to said reservoir and a downstream end connected to a portal vein of said liver during the perfusion process;
second inlet piping with an upstream end connected to said reservoir and a downstream end connected to a hepatic artery of said liver during the perfusion process;
a first pump that produces a flow from upstream to downstream in said first inlet piping; and
a second pump that produces a flow from upstream to downstream in said second inlet piping,
wherein said first pump and said second pump are pumps of the same type, each having a rotating portion for solution sending, and
said rotating portion of said first pump has a greater diameter than said rotating portion of said second pump.

2. The perfusion device according to claim 1, wherein
said perfusate supplied from the downstream end of said first inlet piping by the flow produced in said first inlet piping by said first pump has a flow rate that is 1.2 times or more and 1.5 times or less a flow rate of said perfusate supplied from the downstream end of said second inlet piping by the flow produced in said second inlet piping by said second pump.

3. The perfusion device according to claim 1 or 2, wherein
said first pump is a tube pump that produces a flow of said perfusate in said first inlet piping by squeezing said first inlet piping by rotation of a first roller, and
said second pump is a tube pump that produces a flow of said perfusate in said second inlet piping by squeezing said second inlet piping by rotation of a second roller.

4. The perfusion device according to claim 3, wherein
the number of first rollers included in said first pump is greater than the number of second rollers included in said second pump, each of the first rollers being said first roller, and each of the second rollers being said second roller.

5. The perfusion device according to claim 1 or 2, wherein
said first pump is a centrifugal pump that applies a turning force to said perfusate to send out said perfusate by centrifugal force, said first pump being interposed in said first inlet piping, and
said second pump is said centrifugal pump that is interposed in said second inlet piping.
